# EUROPEAN PATENT APPLICATION

(11) **EP 1 671 845 A1**
(43) Date of publication of application: **21.06.2006**
(21) Application number: 04772119.6
(22) Date of filing: 18.08.2004
(51) Int. Cl.: B60R 11/02, B60K 35/00

(54) **ON-VEHICLE DISPLAY DEVICE**

(30) Priority: 19.08.2003 JP 2003029512
(71) Applicant: MATSUSHITA ELECTRIC INDUSTRIAL CO., LTD., Kadoma-shi, Osaka 571-8501 (JP)
(72) Inventor: KUWABARA, Takashi, Yokohama-shi, Kanagawa 226-0025 (JP); HATTORI, Toshikazu, Yokohama-shi, Kanagawa 226-0025 (JP); IBARAKI, Susumu, Yokohama-shi, Kanagawa 225-0002 (JP); MORIMOTO, Akihiro, Yokohama-shi, Kanagawa 240-0026 (JP); HAMADA, Hiroyuki, Tsuzuki-ku,Yokohama-shi,Kanagawa 224-065 (JP); OTSUKA, Masakazu, Yokohama-shi, Kanagawa 234-0055 (JP); NAKAGAWA, Seiichi, Tsuzuki-ku,Yokohama-shi,Kanagawa 224-053 (JP); NAGASHIMA, Kazumasa, Yokohama-shi, Kanagawa 224-0054 (JP)
(74) Representative: Pautex Schneider, Nicole Véronique
(86) International application number: PCT/JP2004/012158
(87) International publication number: WO 2005/016697

(57) **Abstract**

Herein disclosed is a display apparatus, to be mounted on an automotive vehicle, comprising: display means (4) for displaying images; supporting means (3) for linearly or pivotably supporting the display means (4); and controlling means (2) for controlling the supporting means (3) to have the display means (4) linearly or pivotably moved to ensure the display means 4 being in face to face relationship with the eyes of the passenger.

## Description

### TECHNICAL FIELD OF THE INVENTION

The present invention relates to a display apparatus, to be mounted on an automotive vehicle, for displaying images to be watched by a passenger of the automotive vehicle.

### DESCRIPTION OF THE RELATED ART

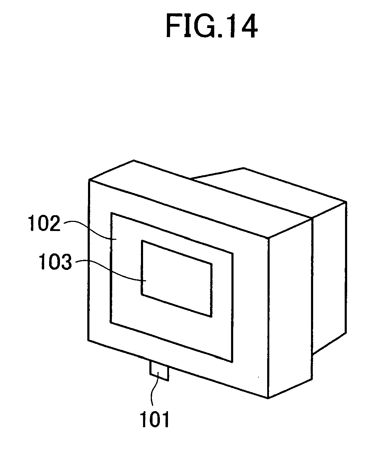

Up until now, there has been proposed a display apparatus which is used for providing stereoscopic images to a viewer, the display apparatus being adapted to detect positions of the viewer's eyes to ensure that the stereoscopic images are shifted toward the viewer's eyes in such a case that the positions of the viewer's eyes are moved. FIG. 14 is a schematic view showing one example of conventional display apparatuses operable to shift the positions of the stereoscopic images in response to the positions of the viewer's pupils, which is disclosed in Japanese Patent Laying-Open Publication No. H10-268230. The display apparatus comprises pupil position detecting means 101 for detecting the positions of the viewer's eyes. The pupil position detecting means 101 is constituted by an infrared light emitting unit, an infrared light camera unit, and a visible light camera unit. The display apparatus further comprises display means 102 having a stereoscopic image display area 103 for displaying thereon stereoscopic images each having a mask pattern._ The display apparatus is operative to control the display means 102 to have the position of the mask pattern shifted to ensure the clear stereoscopic images being watched by the viewer even when the positions of the viewer's eyes are shifted.

The conventional display apparatus mounted on the automotive vehicle, meanwhile, makes it difficult to come to be in face-to-face relationship with the eyes of the viewer when the face of the viewer is shifted upwardly, downwardly, rightward, leftward, forwardly, and backwardly by an acceleration generated by the vehicle movements including a turning in the horizontal direction, a rapid accelerating, and a rapid braking, thereby causing images to be difficult for the viewer to watch. The conventional display apparatus operative to have the images shift toward the viewer's eyes as previously mentioned, however, encounters such a problem that the display apparatus is relatively complicated in construction and expensive to be mounted on an automotive vehicle due to the infrared light emitting unit, the infrared light camera unit, and the visible light camera unit assembled in the conventional display apparatus.

### SUMMARY OF THE INVENTION

It is, therefore, an object of the present invention to provide a display apparatus, to be mounted on an automotive vehicle, for displaying images to be easily watched by a passenger even when the face of the passenger is shifted upwardly, downwardly, rightward, leftward, forwardly, and backwardly by an acceleration generated by the vehicle movements including a turning in the horizontal direction, a rapid accelerating, and a rapid braking, while the display apparatus being relatively simple in construction and relatively at a low cost.

According to one aspect of the present invention, there is provided a display apparatus to be mounted on an automotive vehicle, comprising: display means for displaying images, the display means having a stationary position and a space position away from the stationary position in the automotive vehicle; supporting means for supporting the display means in such a way that the display means is linearly or pivotably movable between the stationary position and the space position; and controlling means for controlling the display means in such a way that the display means is linearly or pivotably moved between the stationary position and the space position by an acceleration of the automotive vehicle while cruising.

The controlling means may be constructed to have the display means returned to the stationary position from the space position.

The supporting means may include a first joint member directly and indirectly connected with the display means; and a second joint member movably connected linearly or pivotably with the first joint member, and the controlling means may include a resilient member for exerting a resilient force to the first joint member and the second joint member to ensure that the display means returns to the stationary position from the space position.

The supporting means may include: a first joint member connected with the display means; and a second joint member movably connected linearly or pivotably with the first joint member, and the controlling means may include a magnetic member for exerting a magnetic force to the first joint member and the second joint member to urge the first joint member and the second joint member to move toward and away from each other to ensure that the display means returns to the stationary position from the space position.

The magnetic member may be constituted by an electromagnetic coil, and the controlling means may include the electromagnetic coil for exerting an electromagnetic force to the first joint member and the second joint member to ensure that the display means returns to the stationary position from the space position.

The controlling means may be constituted by at least one of switching unit for switching from one of two states to the other of two states, one of the two states having the electromagnetic coil energized, and the other of two states having the electromagnetic coil not energized, and electric current adjusting unit for adjusting an electric current to be received by the electromagnetic coil, wherein the controlling means may be operative to control the supporting means to have the display means shifted from the stationary position by the acceleration.

The display apparatus to be mounted on an automotive vehicle may further comprise acceleration detecting means for detecting the acceleration of the automotive vehicle in at least one of a traveling direction, a vertical direction perpendicular to the traveling direction, and a horizontal direction perpendicular to the traveling direction, wherein the controlling means is operative to control the supporting means to have the display means moved toward the space position from the stationary position by the acceleration detected by the detecting means.

The supporting means may be operative to pivotably move the display means around an pivotal axis, the pivotal axis extending in at least one of a vertical direction and a horizontal direction respectively perpendicular to a traveling direction of the automotive vehicle, and the controlling means may be operative to control the supporting means to have the display means pivotably move in a direction opposite to the acceleration of the automotive vehicle.

The supporting means may be operative to linearly move the display means along at least one of a traveling direction, and a horizontal direction perpendicular to the traveling direction, and the controlling means may be operative to control the supporting means to have the display means linearly move in a direction opposite to the acceleration of said automotive vehicle.

The display means may have display surface having a normal line perpendicular thereto, the normal line extending in the horizontal direction, the supporting means having a pivotal axis parallel to the normal line, the supporting means being operative to allow the display means to be pivotably moved around the pivotal axis, and the controlling means may be operative to control the supporting means to have the display means pivotably move in a direction opposite to the acceleration of the automotive vehicle.

The automotive vehicle may comprise speed detecting means for detecting a speed of the automotive vehicle; and angle detecting means for detecting an angle of the traveling direction of the automotive vehicle, wherein the acceleration detecting means is operative to detect the acceleration in the horizontal direction perpendicular to the traveling direction by the speed and the angle.

The controlling means may include a switching unit for switching from one of two states in which the controlling means is operative to control the display means in such a way that the display means is moved by the acceleration detected by the acceleration detecting means, to the other of the two states in which the controlling means is operative to control the display means in such a way that the display means is not moved.

The display means may be constituted by a projector unit and a display screen, the projector unit being operative to project images in an area of the display screen, wherein the controlling means is operative to control the projector unit in such a way that the area of the display screen is shifted by the acceleration detected by the acceleration detecting means.

The display means may be constituted by a stereoscopic image display device for displaying a couple of images collectively forming a stereoscopic image when the couple of images are respectively perceived by right and left eyes of a viewer.

### BRIEF DESCRIPTION OF THE DRAWINGS

The features and advantages of a display apparatus to be mounted on an automotive vehicle according to the present invention will be more clearly understood from the following description taken in conjunction with the accompanying drawings:
FIG 1 is a block diagram showing the display apparatus to be mounted on the automotive vehicle according to the first embodiment of the present invention;
FIG 2 is a perspective view showing the display apparatus to be mounted on the automotive vehicle according to the first embodiment of the present invention;
FIG. 3 is a schematic view showing an example of the supporting means of the display apparatus to be mounted on the automotive vehicle shown in FIG. 2;
FIG 4 is a perspective view showing the display apparatus to be mounted on the automotive vehicle according to the first embodiment of the present invention;
FIG. 5 is a schematic view showing an example of the supporting means of the display apparatus to be mounted on the automotive vehicle shown in FIG. 4;
FIG 6 is a perspective view showing an example of the supporting means of the display apparatus to be mounted on the automotive vehicle shown in FIG. 2;
FIG 7 is a schematic view showing an example of the supporting means of the display apparatus to be mounted on the automotive vehicle shown in FIG 2;
FIG 8 is a schematic view showing an example of the supporting means of the display apparatus to be mounted on the automotive vehicle shown in FIG 2;
FIG 9 is a schematic view showing another example of the supporting means of the display apparatus to be mounted on the automotive vehicle shown in FIG. 2;
FIG 10 is a schematic view showing an example of the supporting means of the display apparatus to be mounted on the automotive vehicle shown in FIG 4;
FIG. 11 is a schematic view showing another example of the supporting means of the display apparatus to be mounted on the automotive vehicle shown in FIG. 4;
FIG. 12 is a graph showing the change of the displacement in response to the acceleration of the automotive vehicle;
FIG. 13 is a block diagram showing the display apparatus to be mounted on the automotive vehicle according to the second embodiment of the present invention; and
FIG. 14 is a schematic view showing the conventional display apparatus operative to shift the position of the stereoscopic image in response to the shift of the position of the viewer's pupils.

### DESCRIPTION OF THE PREFERRED EMBODIMENTS

The embodiments of the display apparatus according to the present invention will now be described in detail in accordance with accompanying drawings.

### (First Embodiment)

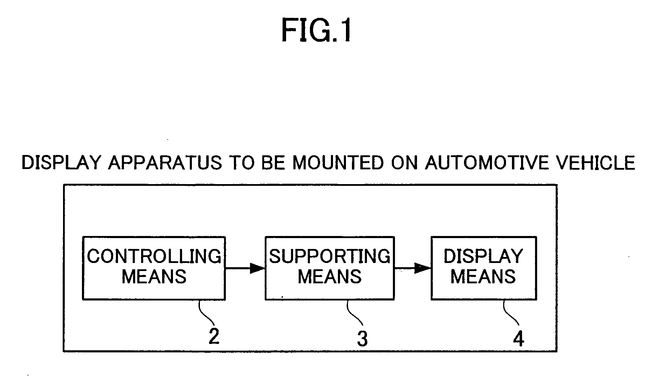

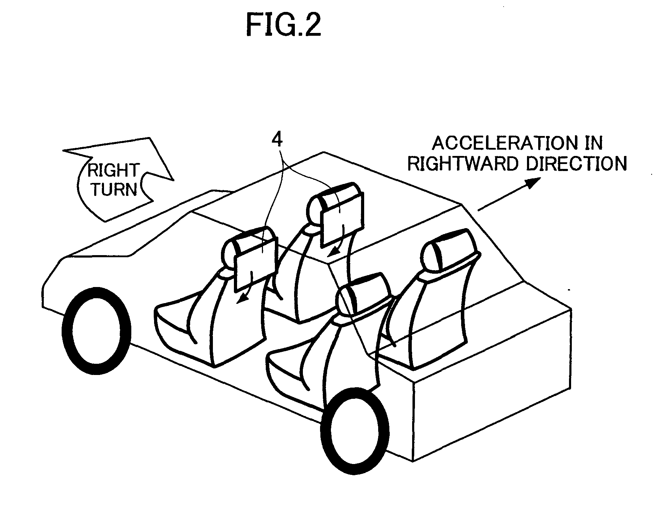

FIG 1 is a block diagram showing the display apparatus to be mounted on an automotive vehicle according to the first embodiment of the present invention. FIG. 2 is a perspective view showing the display apparatus according to the first embodiment of the present invention. The display apparatus according to the first embodiment of the present invention comprises controlling means 2, supporting means 3, and display means 4.

The controlling means 2 is adapted to control the supporting means 3 to have the display means 4 moved in a direction opposite to the acceleration of the automotive vehicle with the displacement of the display means 4 being controlled by the controlling means 2. The display means 4 are each constituted by a liquid crystal display, an electro luminescence display, or the like. Each of the display means 4 is adapted to display images to be watched by a passenger in the automotive vehicle. In the first embodiment shown in FIG. 2, the display means 4 are each secured to the rear portion of the front seat provided in the automotive vehicle through the supporting means 3 to display the images to be watched by the passenger sitting on the rear seat of the automotive vehicle.

The following description will be directed to the operation of the first embodiment of the display apparatus according to the present invention with reference to FIGS. 1 to 3. As shown in FIG 2, the passenger's body is urged to be inclined leftward on this paper with an inertia force generated by the rightward acceleration of the automotive vehicle when the automotive vehicle is turning to the right direction on this paper. This results in the fact that the images on the display means 4 are watched by the passenger with an inclined viewing line when the display means 4 is secured to the rear portion of the front seat, which makes it troublesome for the passenger to watch the images. To solve the above mentioned problem, the display means 4 supported by the supporting means 3 is controlled by the controlling means 2 in such a way that the display means 4 is pivotably moved leftward from the stationary position with a centrifugal force generated by the acceleration of the automotive vehicle.

Similarly, the display means 4 supported by the supporting means 3 is controlled by the controlling means 2 to be pivotably moved rightward under the condition that the automotive vehicle is rotating or turning to the left direction with respect to the traveling direction. The more the absolute value of the acceleration is increased, the more the rotation angle of the display means 4 is increased. With no rightward and leftward acceleration of the automotive vehicle while the automotive vehicle is cruising straightforwardly, the display means 4 is designed to be returned to the stationary position by the controlling means 2.

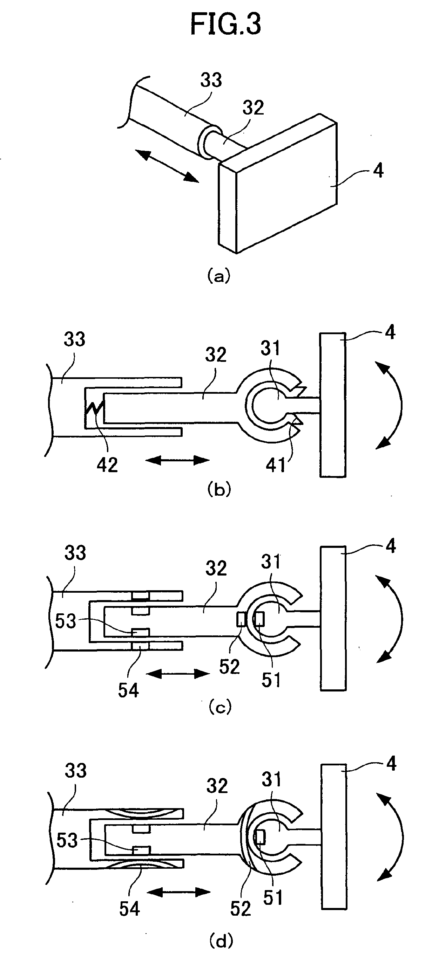

FIGS. 3(a) to 3(d) each shows the supporting means 3 designed to pivotably support the display means 4. As shown in FIG 3, the display means 4 is supported by the supporting means 3 constituted by first to third joint members 31 to 33. In FIG. 3(b) showing the fragmental cross-sectional view taken from FIG 3(a), the first joint member 31 has two portions, one of the portions being integrally formed with part of the display means 4, and the other of the portions being in the form of a spherical shape. The second joint member 32 has two portions, one of the portions formed with a spherical cavity having the spherical portion of the first joint member 31 rotatably received therein, and the other of the portions being in the form of a cylindrical shape. The third joint member 33 is formed with a cylindrical bore having the other of the portions of the second joint member 32 slidably and coaxially received therein.

The controlling means 2 is constructed to urge the display means 4 toward the stationary position by means of a force varied in response to the inertia force generated when the display means 4 is moved out of the stationary position by the acceleration of the automotive vehicle. As shown in FIG 3 (b), the controlling means 2 includes a first resilient member 41 intervening between the first joint member 31 in the form of a spherical shape and the second joint member 32 also in the form of a spherical shape. This means that the first joint member 31 can be resiliently urged by the first resilient member 41 and that the display means 4 can be pivotably moved in the upper, lower, left and right directions with respect to the second joint member 32 to ensure that the display means 4 is returned to the stationary position when the display means 4 is pivotably moved with respect to the second joint member 32 by the acceleration of the automotive vehicle. The controlling means 2 further include a second resilient member 42 intervening between the second and third joint member 32 and 33 to resiliently urge the second joint member 32 to allow the display means 4 to be slidably moved with respect to the third joint member 33 in the traveling direction of the automotive vehicle. The construction of the controlling means 2 leads to the fact that the display means 4 can be urged by the second resilient member 42 toward the stationary position to ensure that the display means 4 is returned to the stationary position when the display means 4 is slidably moved away from the stationary position in the forward and backward directions or pivotably moved in the upper, lower, left and right directions with respect to the third joint member 33 by the acceleration of the automotive vehicle.

The portion of the second joint member 32 may have a slot formed therein extending in one of the vertical direction and the horizontal direction to receive the first joint member 31 so that the first joint member 31 is pivotably moved in one of the vertical direction and the horizontal direction. In this embodiment, each of the first resilient member 41 and the second resilient member 42 is not limited to the spring, and may be constituted by any kind of resilient member capable of exerting a resilient force to the first joint member 31 and the second joint member 32. Each of the first and second resilient members 41 and 42 may be constituted by a plurality of springs.

As shown in FIG. 3(c), the controlling means 2 may include a first to fourth magnetic members 51 to 54, replacing the first resilient member 41 and the second resilient member 42, to respectively exert magnetic forces to the first to third joint members 31 to 33 to ensure that the display means 4 is urged to be returned to the stationary position from the space position by the first to fourth magnetic members 51 to 54. Each of the first to fourth magnetic members 51 to 54 may be constituted by a magnetic substance. Here, each of the second magnetic member 52 and the fourth magnetic member 54 may be constituted by a material other than a magnetic substance, both the materials being capable of being attracted by the magnetic members 51 and 53 respectively generating magnetic forces. The first to fourth magnetic members 51 to 54 may be provided as shown in FIG. 3 (d) to have respective magnetic forces generated with the magnetic forces being at maximum levels when the display means 4 assumes the stationary position and with the magnetic forces acting to urge the display means 4 toward its stationary position when the display means 4 is moved upwardly, downwardly, rightward, leftward, forwardly, and backwardly away from the stationary position. The magnetic forces of the first to fourth magnetic members 51 to 54 may be not only attractive but also repulsive to urge the display means 4 toward its stationary position when the display means 4 is moved away from the stationary position.

Although each of the second magnetic member 52 and the fourth magnetic member 54 is constituted by an electromagnetic coil, while each of the first magnetic member 51 and the third magnetic member 53 being constituted by a magnetic substance as exemplified in FIG. 3(d), any one of the first to fourth magnetic members 51 to 54 may be constituted by an electromagnetic coil. The controlling means 2 further includes at least one of switching unit for switching from one of two states to the other of two states, one of the two states having the electromagnetic coil energized, and the other of two states having the electromagnetic coil not energized, and an electric current adjusting unit for adjusting an electric current to be received by the electromagnetic coil, so that the controlling means 2 can control the movement of the display means 4 from the stationary position in response to the acceleration of the automotive vehicle with the switching unit operative to switch from one of two states to the other of two states or with the electric current adjusting unit operative to adjust an electric current to be received by the electromagnetic coil.

While the previous description is directed to the fact that the first joint member 31 and the second joint member 32 are resiliently connected by the first resilient member 41 with the second joint member 32 and the third joint member 33 resiliently connected by the second resilient member 42 as shown in FIG. 3(b), and that the first joint member 31 and the second joint member 32 are magnetically connected by the first and second magnetic members 51 and 52 with the second joint member 32 and the third joint member 33 magnetically connected by the third and fourth magnetic members 53 and 54 as shown in FIGS. 3(c) and 3(d), the first joint member 31 and the second joint member 32 may be magnetically connected by the first and second magnetic members 51 and 52 as shown in FIGS. 3(c) and 3(d) with the second joint member 32 and the third joint member 33 resiliently connected by the second resilient member 42 as shown in FIG 3(b) according to the present invention. Or otherwise, the second joint member 32 and the third joint member 33 may be magnetically connected by the third and fourth magnetic members 53 and 54 with the first joint member 31 and the second joint member 32 resiliently connected by the first resilient member 41 as shown in FIG. 3(b) according to the present invention. In short, the first joint member 31 and the second joint member 32 may be resiliently connected by the first resilient member 41 or may be magnetically connected by the first and second magnetic members 51 and 52 according to the present invention while the second joint member 32 and the third joint member 33 may be resiliently connected by the second resilient member 42 or may be magnetically connected by the third and fourth magnetic members 53 and 54 according to the present invention. Any combination of the first and second resilient members 41 and 42, and the first to fourth magnetic members 51 to 54 may be used as the controlling means 2.

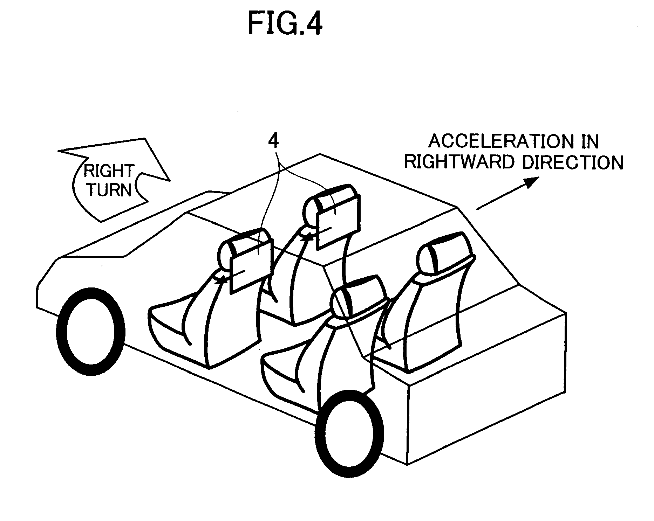

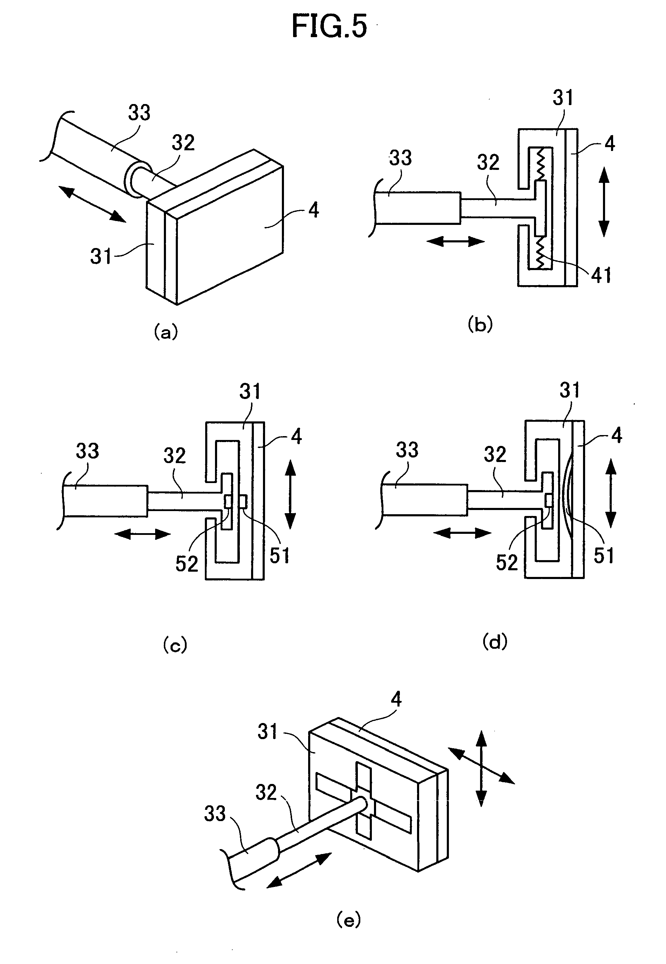

As shown in FIG 4, the controlling means 2 may be adapted to control the supporting means 3 to have the display means 4 linearly moved in the leftward direction on this paper from the stationary position when the acceleration is applied to the automotive vehicle in the rightward direction on this paper with the automotive vehicle turning to the right direction on this paper. FIGS. 5(a) to 5(d) are respectively schematic views of examples each showing the supporting means 3 adapted to support the display means 4 in such a way that the display means 4 is linearly movable in the horizontal direction perpendicular to the traveling direction. As shown in FIG. 5(a), the display means 4 is supported by the first to third joint members 31 to 33 collectively constituting the supporting means 3. FIG 5(b) is a fragmentary plan view seen from the position above the supporting means 3, and FIG 5(e) is a perspective view of the supporting means 3 seen from the position backward of the display means 4. The first joint member 31 is secured to the rear portion of the display means 4, and formed with a cross-shaped groove designed to receive one of the portions of the second joint member 32 in such a way that the second joint member 32 is not removed from the groove. The other of the portions of the second joint member 32 is the same in construction as the one of the portions of the second joint member 32 shown in FIGS. 3(b) to 3(d). The third joint member 33 shown in FIGS. 5(a) to 5(d) is the same in construction as the third joint member 33 shown in FIGS. 3(b) to 3(d). The first joint member 31 may be formed with a groove in place of the cross-shaped groove previously mentioned. The first joint member 31 may be formed with a groove horizontally extending so that the display means 4 can be moved in the groove rightward and leftward by the acceleration of the automotive vehicle. The first joint member 31 may be formed with a groove vertically extending so that the display means 4 can be moved in the groove upwardly and downwardly by the acceleration of the automotive vehicle.

The controlling means 2 is constructed to exert the resilient force to the supporting means 3 to have the display means 4 returned to the stationary position from the space position when the inertia force is generated by the acceleration of the automotive vehicle. As shown in FIG. 5(b), the groove has a top wall, a bottom wall, a right wall, and a left wall, while the end portion of the second joint member 32 has a top surface, a bottom surface, a right surface, and a left surface. A plurality of the first resilient members 41 are respectively placed between the top wall and the top surface, between the bottom wall and the bottom surface, between the right wall and the right surface, and between the left wall and the left surface. The display apparatus thus constructed as previously mentioned can allow the display means 4 to be linearly movable in each of the horizontal and vertical directions with respect to the traveling direction, and can allow the display means 4 to be urged toward the stationary position to ensure that the display means 4 is returned to the stationary position when the display means 4 is linearly moved away from the stationary position in the horizontal and vertical directions.

As shown in FIG. 5(c), the controlling means 2 may include first and second magnetic members 51 and 52 for producing respective magnetic forces acting to attract materials, the magnetic forces collectively exerted to the first joint member 31 and the second joint member 32 to ensure the display means 4 being returned to the stationary position from the space position. Each of the first magnetic member 51 and the second magnetic member 52 may be constituted by either a magnetic substance or an electromagnetic coil. Here, one of the first magnetic member 51 and the second magnetic member 52 may be constituted by a material other than a magnetic substance, the material being attractive to a magnetic member by a magnetic force. The first and second magnetic members 51 and 52 are placed at respective positions as shown in FIG 5(d) to have respective magnetic forces generated with the magnetic forces being at maximum levels when the display means 4 assumes the stationary position and with the magnetic forces acting to urge the display means 4 toward its stationary position when the display means 4 is moved away upwardly, downwardly, rightward, leftward, forwardly, and backwardly from the stationary position. The magnetic forces produced by the respective first and second magnetic members 51 and 52 may be not only attractive but also repulsive to urge the display means 4 toward its stationary position in such a case that the display means 4 is moved away from the stationary position. The display apparatus thus constructed as previously mentioned can allow the display means 4 to be movable in each of the traveling direction, horizontal direction perpendicular to the traveling direction, and vertical direction perpendicular to the traveling direction, and can allow the display means 4 to be urged toward the stationary position to ensure that the display means 4 is returned to the stationary position when the display means 4 is moved away upwardly, downwardly, rightward, leftward, forwardly, and backwardly from the stationary position by the acceleration of the automotive vehicle.

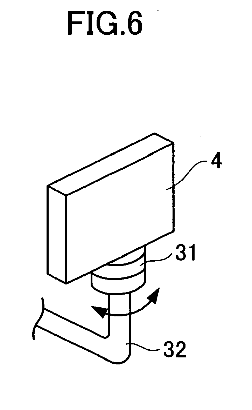

Referring now to FIGS. 6 to 11 of the drawings, there are shown different examples embodying the first embodiment of the present invention.

In FIG. 6, the first joint member 31 is shown as being rotatable with respect to the second joint member 32 in the horizontal direction. The second joint member 32 has a vertical portion extending in the vertical direction. The vertical portion of the second joint member 32 is adapted to support the display means 4, and the display means 4 is rotatable around the center axis of the vertical portion of the second joint member 32. The controlling means 2 is adapted to control the location of the display means 4 by having the supporting means 3 rotated in the direction opposite to the acceleration of the automotive vehicle.

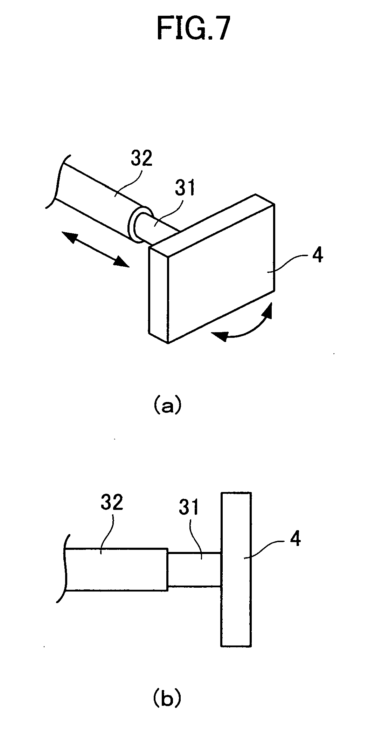

In FIG 7, the first joint member 31 is forwardly and backwardly movable linearly with respect to the second joint member 32. The second joint member 32 has a cylindrical bore formed therein to slidably receive the first joint member 31. The controlling means 2 is adapted to control the first joint member 31 to ensure that the display means 4 is forwardly and backwardly moved linearly with respect to the second joint member 32 in a direction opposite to the acceleration of the automotive vehicle.

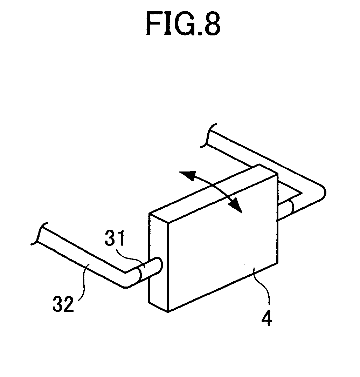

In FIG. 8, there is shown a construction in which the first joint member 31 swingable with respect to the second joint member 32 around the center axis of the display means 4 horizontally extending to the display screen of the display means 4. The first joint member 31 is supported by the second joint member 32 in a perpendicular relationship with the gravity so that the display means 4 can be swung around the center axis of the first joint member 31. The controlling means 2 is adapted to control the location of the display means 4 by having the supporting means 3 rotated in the direction opposite to the acceleration of the automotive vehicle.

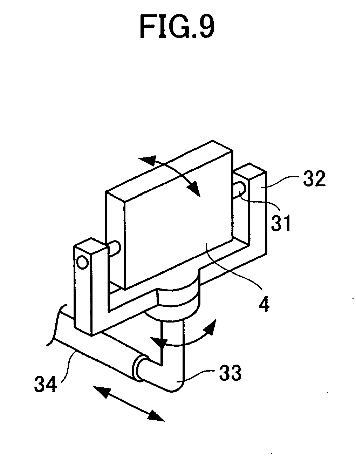

In FIG. 9, the supporting means 3 is constituted by first to fourth joint members 31 to 34. The first joint member 31 is rotatable around the horizontal center axis of the display screen of the display means 4 with respect to the second joint member 32, whereupon the upper and lower end portions of the first joint member 31 are forwardly and backwardly moved. The second joint member 32 is horizontally rotatable around the center axis of the vertical portion of the third joint member 33 with respect to the third joint member 33. The fourth joint member 34 has formed therein a cylindrical bore to slidably receive the third joint member 33 therein to ensure that the third joint member 33 is forwardly and backwardly, i.e., horizontally slidable with respect to and in parallel relationship with the fourth joint member 34.

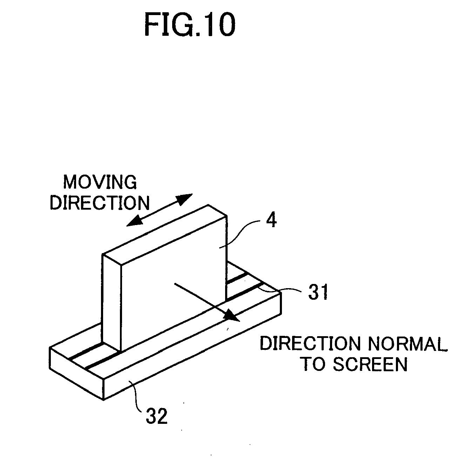

In FIG. 10, the first joint member 31 is leftward and rightward, i.e., horizontally movable with respect to the second joint member 32. The supporting means 3 is shown to comprise the first joint member 31 adapted to have the display means 4 slidably moved in the rightward and leftward direction, and the second joint member 32 for supporting the first joint member 31. The controlling means 2 is adapted to control the location of the display means 4 by having the supporting means 3 moved in the horizontal direction opposite to the acceleration of the automotive vehicle.

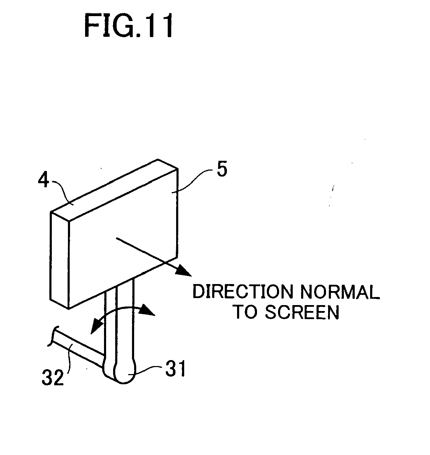

In FIG. 11, the display means 4 is pivotably, i.e., clockwise and counterclockwise movable around a pivotal axis in parallel relationship with the normal line of the display screen. The second joint member 32 is placed with the center axis of the second joint member 32 being in parallel relationship with the normal line of the display screen. The first joint member 31 is secured to the display means 4, and supported on the second joint member 32 to be pivotable around the center axis of the second joint member 32 with its center axis extending in the vertical direction so that the display means 4 can be pivotably moved around the center axis of the second joint member 32. The controlling means 2 is adapted to control the location of the display means 4 by having the supporting means 3 moved in the horizontal direction opposite to the acceleration of the automotive vehicle.

The construction of the display apparatus to have the display means 4 moved and rotated is not limited to the exemplified constructions shown in FIGS. 6 to 11.

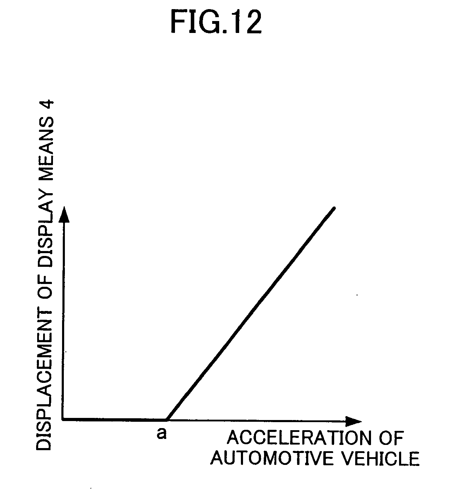

The display apparatus to be mounted on the automotive vehicle may further comprise an adjusting unit for adjusting the vertical displacement of the display means 4 from the stationary position to the space position. The adjustment by the adjusting unit is due to the fact that the positions of respective passengers' eyes are different from each other resulting from the difference of respective passengers' height, sitting height, and muscular strength and additionally displaced by the acceleration of the automotive vehicle. The display means 4 may be stayed at the stationary position until the acceleration of the automotive vehicle is small and reaches the predetermined level. The display means 4 is constructed in such a manner that the resilient forces respectively generated by the first and second resilient members 41 and 42 or by the adjusted magnetic forces respectively generated by the first to fourth magnetic members 51 to 54 can be adjusted by the passenger. FIG 12 is a graph showing that the display means 4 is maintained at the stationary position under the condition that the acceleration of the automotive vehicle is smaller than the predetermined level "a", while the display means 4 of the display apparatus is moved with the displacement varied in response to the acceleration of the automotive vehicle under the condition that the acceleration of the automotive vehicle is larger than the predetermined level "a".

While there has been described about the fact that the display means 4 is constituted by the liquid crystal display or the electro luminescence display, the display means 4 may be constituted by an image projector unit for projecting images, and a display screen to have the images projected thereon. Under the condition as above described, the image projector and the display screen are linearly or pivotably moved in the horizontal direction perpendicular to the traveling direction to ensure that the area of the projected images on the display screen is shifted when the horizontal acceleration is applied to the automotive vehicle. The display screen, meanwhile, may have a flat or spherical surface having a large area, and the controlling means 2 is adapted to control the image projector or an optical unit of the image projector to ensure that only the projected images on the display screen is rotated and shifted in parallel relationship with one another.

The display means 4 may be constituted by a stereoscopic image display device for displaying a stereoscopic image formed with different image sections, the difference between the image sections being referred to as a parallax, respectively perceived by right and left eyes of the passenger, one typical example of which is disclosed in Japanese Patent Laying-Open Publication No. H10-268230. The stereoscopic image display device is, for example, constituted by a parallax barrier or a lenticular lens. The display apparatus to be mounted on the automotive vehicle according to the first embodiment of the present invention is preferable when the stereoscopic image is required to be watched by the passenger substantially in the normal direction of the display screen with the stereoscopic image display device being constituted by the parallax barrier. Here, the stereoscopic image display device is not limited to the parallax barrier and the lenticular lens.

As described in the above, the first embodiment of the display apparatus according to the present invention makes it possible for the passenger to watch the images on the display screen substantially in the normal direction even if the positions of the passenger's eyes are horizontally shifted by the horizontal acceleration of the automotive vehicle caused at the time of the automotive vehicle horizontally moved or turning to the horizontal direction. The display apparatus thus constructed, therefore, can allow the passenger to watch the images of the display screen without difficulties even if the position of the passenger's face is shifted upwardly, downwardly, rightward, leftward, forwardly, and backwardly by the acceleration of the automotive vehicle caused with the automotive vehicle turning to the horizontal direction, rapidly accelerating, and rapidly braking, and can be simple in construction and produced at a relatively low cost. The display apparatus to be mounted on the automotive vehicle according to the first embodiment of the present invention is highly practicable in the case that the passenger is concentrating on watching the images on the display screen without seeing the scenery outside the window of the automotive vehicle, thereby causing the passenger to highly be affected by the horizontal acceleration of the automotive vehicle.

### (Second Embodiment)

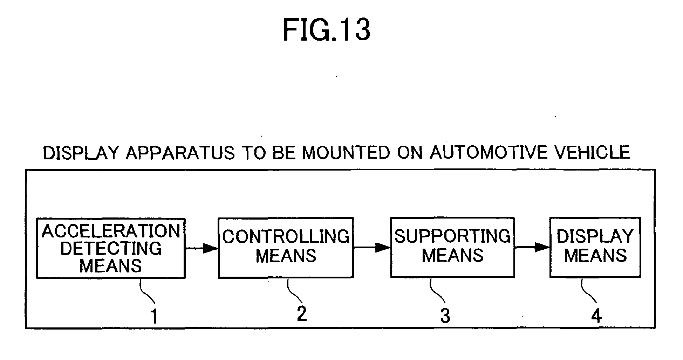

Referring now to the drawings, the second embodiment of the display apparatus to be mounted on the automotive vehicle according to the present invention will hereinafter be described in detail. FIG. 13 is a block diagram showing the display apparatus to be mounted on the automotive vehicle according to the second embodiment of the present invention. The display apparatus according to the second embodiment of the present invention comprises acceleration detecting means 1, controlling means 2, supporting means 3, and display means 4.

The acceleration detecting means 1 is constituted by, for example, an acceleration sensor to be adapted to detect the acceleration of the automotive vehicle caused in at least one of the upward, downward, rightward, leftward, forward, and backward direction, and adapted to output an information indicative of the detected acceleration to the controlling means 2. The controlling means 2 is operative to control the supporting means 3 to have the display means 4 moved in a direction opposite to the acceleration of the automotive vehicle on the basis of the information outputted by the acceleration detecting means 1. The display means 4 is constituted by a liquid crystal display, an electro luminescence display, or the like. The display means 4 is adapted to display images to be watched by a passenger of the automotive vehicle.

The following description will be directed to the operation of the second embodiment of the display apparatus to be mounted on the automotive vehicle with reference to FIG. 13 according to the present invention. The images displayed on the display means 4 are watched by the passenger with the display means 4 being in face to face relationship with the passenger when the automotive vehicle is straightly traveling with no rightward and leftward acceleration. The passenger's body is, however, urged to be inclined leftward with an inertia force generated by the rightward acceleration of the automotive vehicle when the automotive vehicle is turning to the right direction with respect to the traveling direction. This results in the fact that the images on the display means 4 are watched by the passenger with an inclined viewing line when the display means 4 is secured to the rear portion of the front seat, which makes it difficult for the passenger to watch the images. To solve the above mentioned problem, the display means 4 supported by the supporting means 3 is adapted to be controlled by the controlling means 2 in such a way that the display means 4 is moved leftward from a stationary position by the rightward acceleration detected by the acceleration detecting means 1. In a similar manner, the display means 4 supported by the supporting means 3 is controlled by the controlling means 2 to be moved rightward from the stationary position by the leftward acceleration detected by the acceleration detecting means 1 when the automotive vehicle is turning to the left direction with respect to the traveling direction. The more the absolute value of the acceleration is increased, the more the displacement of the display means 4 is increased. With no rightward and leftward acceleration of the automotive vehicle while the automotive vehicle is cruising straightforwardly after finishing turning to the horizontal direction, the display means 4 is returned to the stationary position by the controlling means 2.

FIGS. 6 to 11 are schematic views each showing a construction of the supporting means 3 for supporting the display means 4 to ensure that the display means 4 is moved from the stationary position to the space position away from the stationary position. The constructions of the supporting means 3 in the second embodiment shown in FIGS. 6 to 11 are the same as the respective constructions of the supporting means 3 described in the first embodiment of the present invention. The construction of the supporting means 3 is not limited to the exemplified constructions shown in FIGS. 6 to 11. The supporting means 3 may be constituted by a motor unit and a gear unit, and the controlling means 2 may be adapted to control the motor unit and the gear unit to have the display means 4 rotated and shifted by the leftward acceleration detected by the acceleration detecting means 1 to ensure the rotation angle and the position of the display means 4 being adjusted.

In the second embodiment of the display apparatus previously described, the rotation angle of the supporting means 3 in the horizontal direction can be varied in response to the displacement of the passenger's eyes with the horizontal acceleration being applied to the automotive vehicle. The displacement of the passenger's eyes is obtained through the experimental measurement on the cruising automotive vehicle. For example, under the condition that the cruising automotive vehicle is turning to the horizontal direction with the cruising speed of 10 km/h and the turning radius of 7.7m, the acceleration of 1.0 m/s² in the horizontal direction is applied to the cruising automotive vehicle. Under the condition as described above, the horizontal displacement angle, viewed from the display means 4, of the passenger's eyes moved away from each other is 10 degrees when the horizontal displacement of the passenger's eyes is assumed to be 10 cm, and the distance from the display means 4 to the passenger's eyes is assumed to be 60 cm. In this case, the rotation angle of the supporting means 3 in the horizontal direction is, therefore, set at 10 degrees.

While there has been described about the fact that the acceleration detecting means 1 is operative to directly detect the horizontal acceleration of the automotive vehicle, the automotive vehicle may further comprise speed detecting means for detecting a speed of the automotive vehicle, and angle detecting means for detecting an angle of the traveling direction of the automotive vehicle, wherein the acceleration detecting means 1 may be adapted to detect the acceleration in the horizontal direction perpendicular to the traveling direction based on the speed and the angle respectively detected by the speed detecting means and the angle detecting means. The value of the acceleration can be calculated by v²/r, wherein "v" is the speed of the automotive vehicle detected by the speed detecting means, and "r" is the turning radius of the automotive vehicle calculated from the angle of the traveling direction "θ" detected by the angle detecting means. In this case, the speed "v" of the automotive vehicle is calculated from a speed pulse signal outputted by a car wheel speed sensor provided with a car wheel. The angle detecting means is constituted by steering angle detecting means to be operative to detect a rotation angle of a steering wheel of the automotive vehicle to ensure that the angle of the traveling direction "θ" is calculated on the basis of the detected rotation angle of the steering wheel. Here, the direction of the acceleration is calculated by the angle of the traveling direction "θ". While there has been described about the fact that the speed detecting means has been constituted by the car wheel speed sensor, the speed detecting means may be constituted by an angular speed sensor to be operative to detect the angular speed "ω" in the yaw direction of the automotive vehicle so that the acceleration detecting means 1 can detect the acceleration of the automotive vehicle on the basis of the angular speed "ω". In this case, the value of the acceleration is calculated by rω². The direction of the acceleration is determined by the acceleration detecting means 1 on the basis of whether the angle speed "ω" has a positive value or a negative value.

In the second embodiment, the automotive vehicle may further comprise posture detecting means for detecting a posture of the passenger instead of the acceleration detecting means 1. The posture detecting means is constituted by, for example, a piezoelectric sensor embedded in a seat of the automotive vehicle to detect the posture of the passenger. The posture detecting means may be constituted by an in-vehicle camera unit for detecting the posture of the passenger based on the position of the passenger's face or eyes. The posture detecting means is not limited to the above mentioned piezoelectric sensor or in-vehicle camera unit. The controlling means 2 is adapted to control the supporting means 3 to have the supporting means 3 moved on the basis of the posture of the passenger detected by the posture detecting means.

The automotive vehicle may further comprise a navigation apparatus so that the horizontal acceleration of the automotive vehicle is calculated. In this case, the radius "r" of the turning circle of the automotive vehicle is calculated on the basis of location information and travel route setting information, while the speed "v" of the automotive vehicle is calculated on the basis of the difference of the location information over a certain period of time. The horizontal acceleration of the automotive vehicle is, therefore, obtained by the calculation of v²/r. In this case, the radius "r" of the turning circle of the automotive vehicle may be calculated through the angle of the traveling direction "θ" detected by the above mentioned steering angle detecting means so that the radius "r" is precisely calculated.

The display apparatus to be mounted on the automotive vehicle may further comprise an adjusting unit for adjusting the vertical displacement of the display means 4 from the stationary position to the space position. The adjustment by the adjusting unit is due to the fact that the positions of respective passengers' eyes are different from each other resulting from the difference of respective passengers' height, sitting height, and muscular strength and additionally displaced by the acceleration of the automotive vehicle. The display means 4 may be stayed at the stationary position until the acceleration of the automotive vehicle is small and reaches the predetermined level. FIG 12 is a graph showing that the display means 4 is maintained at the stationary position under the condition that the acceleration of the automotive vehicle is smaller than the predetermined level "a", while the display means 4 of the display apparatus is moved with the displacement varied in response to the acceleration of the automotive vehicle under the condition that the acceleration of the automotive vehicle is larger than the predetermined level "a".

The controlling means 2 may include a switching unit for switching from one of two states in which the controlling means 2 is operative to control the display means 4 in such a way that the display means 4 is moved by the acceleration detected by the acceleration detecting means 1, to the other of the two states in which the controlling means 2 is operative to control the display means 4 in such a way that the display means 4 is not moved.

While there has been described about the fact that the display means 4 is constituted by the liquid crystal display or the electro luminescence display, the display means 4 may be constituted by an image projector unit for projecting images, and a display screen to have the images projected thereon. Under the condition as above described, the image projector and the display screen are linearly or pivotably moved in the horizontal direction perpendicular to the traveling direction to ensure that the area of the projected images on the display screen is shifted when the horizontal acceleration is applied to the automotive vehicle. The display screen, meanwhile, may have a flat or spherical surface having a large area, and the controlling means 2 is adapted to control the image projector or an optical unit of the image projector to ensure that only the projected images on the display screen is rotated and shifted in parallel relationship with one another.

The display means 4 may be constituted by a stereoscopic image display device for displaying a stereoscopic image formed with different image sections, the difference between the image sections being referred to as a parallax, respectively perceived by right and left eyes of the passenger, one typical example of which is disclosed in Japanese Patent Laying-Open Publication No. H10-268230. The stereoscopic image display device is, for example, constituted by a parallax barrier or a lenticular lens. The display apparatus to be mounted on the automotive vehicle according to the second embodiment of the present invention is preferable when the stereoscopic image is required to be watched by the passenger substantially in the normal direction of the display screen with the stereoscopic image display device being constituted by the parallax barrier. Here, the stereoscopic image display device is not limited to the parallax barrier and the lenticular lens.

As described in the above, the second embodiment of the display apparatus according to the present invention makes it possible for the passenger to watch the images on the display screen substantially in the normal direction even if the positions of the passenger's eyes are horizontally shifted by the horizontal acceleration of the automotive vehicle caused at the time of the automotive vehicle horizontally moved or turning to the horizontal direction. The display apparatus to be mounted on the automotive vehicle according to the second embodiment of the present invention is highly practicable in the case that the passenger is concentrating on watching the images on the display screen without seeing the scenery outside the window of the automotive vehicle, thereby causing the passenger to highly be affected by the horizontal acceleration of the automotive vehicle.

### INDUSTRIAL APPLICABILITY OF THE PRESENT INVENTION

In accordance with the present invention, there is provided a display apparatus to be mounted on the automotive vehicle which can displace the display means to ensure that the images on the display screen are watched by a passenger substantially in the normal direction, the display apparatus, to be mounted on the automotive vehicle being available for providing images to the passenger.

## Claims

1. A display apparatus to be mounted on an automotive vehicle, comprising:
display means for displaying images, said display means having a stationary position and a space position away from said stationary position in said automotive vehicle;
supporting means for supporting said display means in such a way that said display means is linearly or pivotably movable between said stationary position and said space position; and
controlling means for controlling said display means in such a way that said display means is linearly or pivotably moved between said stationary position and said space position by an acceleration of said automotive vehicle while cruising.

2. A display apparatus to be mounted on an automotive vehicle as set forth in claim 1, in which said controlling means is constructed to have said display means returned to said stationary position from said space position.

3. A display apparatus to be mounted on an automotive vehicle as set forth in claim 2, in which said supporting means includes:
a first joint member directly and indirectly connected with said display means; and
a second joint member movably connected linearly or pivotably with said first joint member, and in which
said controlling means includes a resilient member for exerting a resilient force to said first joint member and said second joint member to ensure that said display means returns to said stationary position from said space position.

4. A display apparatus to be mounted on an automotive vehicle as set forth in claim 2, in which said supporting means includes:
a first joint member connected with said display means; and
a second joint member movably connected linearly or pivotably with said first joint member, and in which
said controlling means includes a magnetic member for exerting a magnetic force to said first joint member and said second joint member to urge said first joint member and said second joint member to move toward and away from each other to ensure that said display means returns to said stationary position from said space position.

5. A display apparatus to be mounted on an automotive vehicle as set forth in claim 4, in which
said magnetic member is constituted by an electromagnetic coil, and in which
said controlling means includes said electromagnetic coil for exerting an electromagnetic force to said first joint member and said second joint member to ensure that said display means returns to said stationary position from said space position.

6. A display apparatus to be mounted on an automotive vehicle as set forth in claim 5, in which
said controlling means is constituted by at least one of switching unit for switching from one of two states to the other of two states, one of said two states having said electromagnetic coil energized, and the other of two states having said electromagnetic coil not energized, and electric current adjusting unit for adjusting an electric current to be received by said electromagnetic coil,
wherein said controlling means is operative to control said supporting means to have said display means shifted from said stationary position by said acceleration.

7. A display apparatus to be mounted on an automotive vehicle as set forth in claim 1, which further comprises
acceleration detecting means for detecting said acceleration of said automotive vehicle in at least one of a traveling direction, a vertical direction perpendicular to said traveling direction, and a horizontal direction perpendicular to said traveling direction,
wherein said controlling means is operative to control said supporting means to have said display means moved toward said space position from said stationary position by said acceleration detected by said detecting means.

8. A display apparatus to be mounted on an automotive vehicle as set forth in claim 1, in which said supporting means is operative to pivotably move said display means around an pivotal axis, said pivotal axis extending in at least one of a vertical direction and a horizontal direction respectively perpendicular to a traveling direction of said automotive vehicle, and in which
said controlling means is operative to control said supporting means to have said display means pivotably move in a direction opposite to said acceleration of said automotive vehicle.

9. A display apparatus to be mounted on an automotive vehicle as set forth in claim 1, in which said supporting means is operative to linearly move said display means along at least one of a traveling direction, and a horizontal direction perpendicular to said traveling direction, and in which
said controlling means is operative to control said supporting means to have said display means linearly move in a direction opposite to said acceleration of said automotive vehicle.

10. A display apparatus to be mounted on an automotive vehicle as set forth in claim 1, in which
said display means has display surface having a normal line perpendicular thereto, said normal line extending in the horizontal direction, said supporting means having a pivotal axis parallel to said normal line, said supporting means being operative to allow said display means to be pivotably moved around said pivotal axis, and in which
said controlling means is operative to control said supporting means to have said display means pivotably move in a direction opposite to said acceleration of said automotive vehicle.

11. A display apparatus to be mounted on an automotive vehicle as set forth in claim 7, in which
said automotive vehicle comprises:
speed detecting means for detecting a speed of said automotive vehicle; and
angle detecting means for detecting an angle of said traveling direction of said automotive vehicle,
wherein said acceleration detecting means is operative to detect said acceleration in the horizontal direction perpendicular to said traveling direction on the basis of said speed and said angle.

12. A display apparatus to be mounted on an automotive vehicle as set forth in claim 7, in which
said controlling means includes a switching unit for switching from one of two states in which said controlling means is operative to control said display means in such a way that said display means is moved by said acceleration detected by said acceleration detecting means, to the other of said two states in which said controlling means is operative to control said display means in such a way that said display means is not moved.

13. A display apparatus to be mounted on an automotive vehicle as set forth in claim 1, in which
said display means is constituted by a projector unit and a display screen, said projector unit being operative to project images in an area of said display screen,
wherein said controlling means is operative to control said projector unit in such a way that said area of said display screen is shifted on the basis of said acceleration detected by said acceleration detecting means.

14. A display apparatus to be mounted on an automotive vehicle as set forth in claim 1, in which
said display means is constituted by a stereoscopic image display device for displaying a couple of images collectively forming a stereoscopic image when said couple of images are respectively perceived by right and left eyes of a viewer.
